# EUROPEAN PATENT APPLICATION

(11) **EP 2 772 401 A1**
(43) Date of publication of application: **03.09.2014**
(21) Application number: 11874629.6
(22) Date of filing: 27.10.2011
(51) Int. Cl.: B60W 10/06, B60K 6/48, B60K 6/54, B60W 10/02, B60W 10/08, B60W 20/00, F02D 29/02

(54) **VEHICLE CONTROL DEVICE**

(71) Applicant: Toyota Jidosha Kabushiki Kaisha, Toyota-shi, Aichi 471-8571 (JP)
(72) Inventor: NAKANISHI, Naoki, Toyota-shi Aichi 471-8571 (JP); KATO, Yasuyuki, Toyota-shi Aichi 471-8571 (JP); IDESHIO, Yukihiko, Toyota-shi Aichi 471-8571 (JP); KOJIMA, Susumu, Toyota-shi Aichi 471-8571 (JP); YOSHIKAWA, Masato, Toyota-shi Aichi 471-8571 (JP)
(74) Representative: Albutt, Anthony John
(86) International application number: PCT/JP2011/074860
(87) International publication number: WO 2013/061454

(57) **Abstract**

A vehicle control device includes a direct-injection engine and an electric rotating machine connected to the engine, wherein the vehicle control device stops the engine after opening a throttle while maintaining an engine speed by the electric rotating machine (S6) at the time there is a request to stop the engine (S1-Y). The engine speed is preferably maintained by an output torque of the electric rotating machine (S6) at the time fuel supply to the engine is stopped (S5) and the throttle is opened. At the time the throttle is opened while fuel is continuously supplied to the engine, it is preferable to maintain the engine speed by allowing the electric rotating machine to generate electric power.

## Description

### Field

The present invention relates to a vehicle control device.

### Background

Technology to stop an engine while a vehicle runs is conventionally known. For example, Patent Literature 1 discloses technology of a control device of a hybrid vehicle which disengages a clutch interposed between the engine and a motor and then stops the engine by a fuel cut when a predetermined engine stopping condition is satisfied when the engine and the motor are used together while driving.

### Citation List

### Patent Literature

Patent Literature 1: Japanese Patent Application Laid-open No. 2010-143307

### Summary

### Technical Problem

When the engine stops, a surge tank pressure is preferably recovered for securing performance of next engine startup. However, when a throttle is rapidly opened so as to recover the surge tank pressure when the engine stops, an abnormal sound might occur by variation in intake air pressure. It is desired to recover the surge tank pressure and inhibit occurrence of the abnormal sound when the engine stops.

An object of the present invention is to provide a vehicle control device capable of satisfying both the recovery of the surge tank pressure and inhibition of the occurrence of the abnormal sound when the engine stops. Solution to Problem

A vehicle control device according to the present invention includes a direct-injection engine; and an electric rotating machine connected to the engine, wherein the vehicle control device stops the engine after opening a throttle while maintaining an engine speed of the engine by the electric rotating machine at the time there is a request to stop the engine.

In the vehicle control device, it is preferable that the vehicle control device maintains the engine speed of the engine by an output torque of the electric rotating machine at the time fuel supply to the engine is stopped and the throttle is opened.

In the vehicle control device, it is preferable that the vehicle control device maintains the engine speed of the engine by allowing the electric rotating machine to generate electric power at the time the throttle is opened while continuously supplying fuel to the engine.

In the vehicle control device, it is preferable to further include a clutch configured to connect/disconnect the engine to/from the electric rotating machine, wherein the vehicle control device preferably starts up the engine by engaging the clutch and cranking by the torque of the electric rotating machine at the time restarting a stopped engine in a case in which the electric rotating machine cannot maintain the engine speed of the engine before the engine stops.

In the vehicle control device, it is preferable that the vehicle control device stops the engine after maintaining the engine speed of the engine by the output torque of the electric rotating machine such that fresh air passes through a cylinder of the engine to flow into an exhaust system.

### Advantageous Effects of Invention

A vehicle control device according to the present invention provided with a direct-injection engine and an electric rotating machine connected to the engine stops the engine after opening a throttle while maintaining an engine speed by the electric rotating machine when there is a request to stop the engine. Therefore, the vehicle control device according to the present invention has an effect of satisfying both recovery of a surge tank pressure and inhibition of occurrence of an abnormal sound when the engine stops.

### Brief Description of Drawings

FIG. 1 is a flowchart illustrating operation of a vehicle control device according to a first embodiment.
FIG. 2 is a schematic configuration diagram of a hybrid vehicle according to the first embodiment.
FIG. 3 is a view illustrating an engine in detail.
FIG. 4 is a time chart related to pre-stop motoring control.
FIG. 5 is a view illustrating an example of a relationship between an engine speed and a threshold value of a surge tank pressure.
FIG. 6 is a view illustrating a correspondence relationship between the engine speed and a throttle opening of the pre-stop motoring control.
FIG. 7 is a time chart related to pre-stop charge control.
FIG. 8 is a view illustrating a relationship between a crank angle and pumping energy of the engine.
FIG. 9 is a flowchart illustrating operation of a vehicle control device according to a second embodiment.
FIG. 10 is a time chart related to pre-stop motoring control of the second embodiment.
FIG. 11 is a view illustrating a relationship between an engine speed when a K0 clutch is released and a passing fresh air quantity while rotation slows down.

### Description of Embodiments

A vehicle control device according to embodiments of the present invention is hereinafter described in detail with reference to the drawings. Meanwhile, the present invention is not limited by the embodiments. Components in the following embodiments include a component easily conceived of by one skilled in the art or a substantially identical component.

### [First Embodiment]

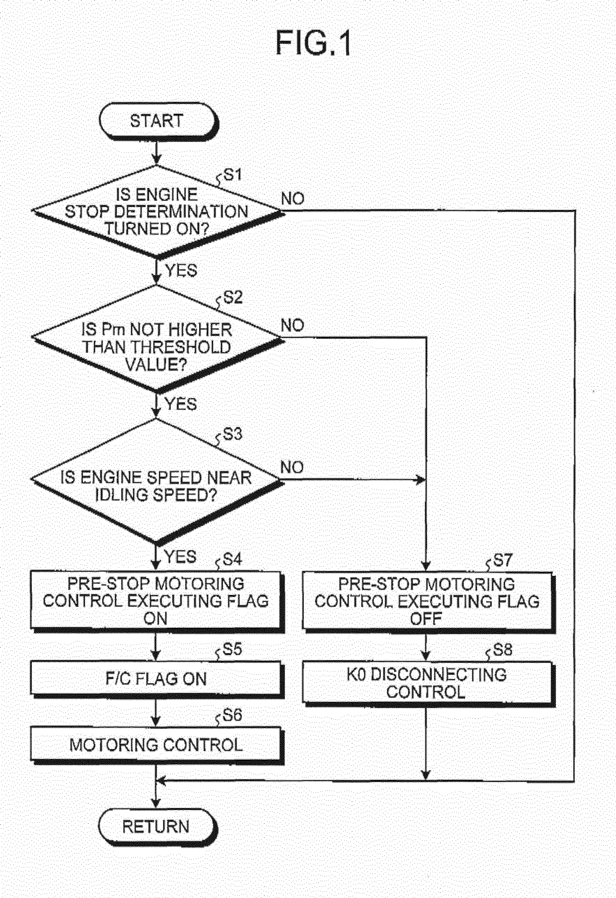

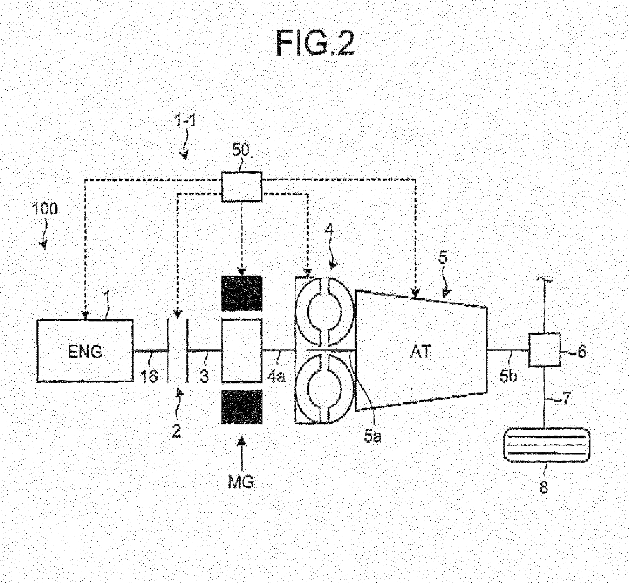

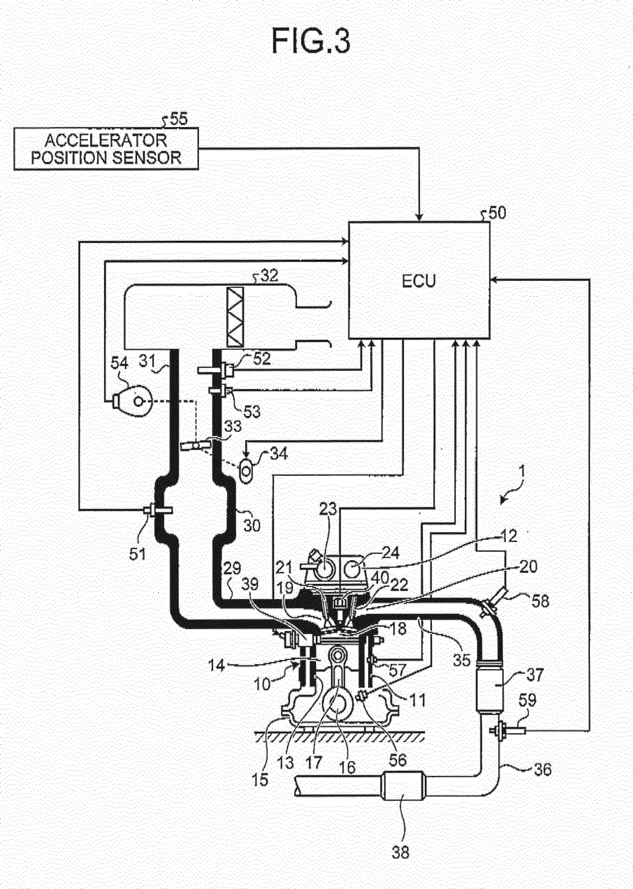

A first embodiment is described with reference to FIGS. 1 to 7. This embodiment relates to a vehicle control device. FIG. 1 is a flowchart illustrating operation of the vehicle control device according to the first embodiment, FIG. 2 is a schematic configuration diagram of a hybrid vehicle according to the first embodiment, and FIG. 3 is a view illustrating an engine in detail.

A hybrid vehicle 100 illustrated in FIG. 2 is provided with an engine 1, a K0 clutch 2, an electric rotating machine MG, a torque converter 4, a transmission 5, and a drive wheel 8. The engine 1 is connected to the electric rotating machine MG, the torque converter 4, the transmission 5, and the drive wheel 8 through the K0 clutch 2. That is, the electric rotating machine MG is arranged so as to be closer to the drive wheel 8 than the engine 1, and the K0 clutch 2 connects/disconnects the engine 1 to/from the electric rotating machine MG. The K0 clutch 2 is interposed between a crankshaft 16 of the engine 1 and a rotary shaft 3 of the electric rotating machine MG. The K0 clutch 2, which is a wet multiple disk clutch device, for example, connects the engine 1 to the electric rotating machine MG in an engaged state and disconnects the engine 1 from the electric rotating machine MG in a released state.

The electric rotating machine MG has a function as a motor (electric motor) and a function as a power generator. The electric rotating machine MG is connected to a battery through an inverter. The electric rotating machine MG is capable of converting electric power supplied from the battery to mechanical power to output and being driven by input power to convert the mechanical power to the electric power. The electric power generated by the electric rotating machine MG can be accumulated in the battery. An alternating current synchronous motor generator can be used, for example, as the electric rotating machine MG.

The torque converter 4 is arranged so as to be closer to the drive wheel 8 than the electric rotating machine MG. An input shaft 4a of the torque converter 4 is connected to the rotary shaft 3 of the electric rotating machine MG. The torque converter 4 is capable of transmitting a torque input to the input shaft 4a to an input shaft 5a of the transmission 5 through operating fluid. The torque converter 4 includes a lock-up mechanism and this directly transmits the torque input to the input shaft 4a to the input shaft 5a of the transmission 5 in a lock-up state.

The transmission 5, which is an automatic transmission, is a stepped automatic transmission (A/T), for example. Meanwhile, the transmission 5 is not limited to this and may be a continuously variable transmission (CVT) and the like. An output shaft 5b of the transmission 5 is connected to the drive wheel 8 through a differential mechanism 6 and a drive shaft 7.

As illustrated in FIG. 3, the engine 1 includes a cylinder block 11, a cylinder head 12, and a crank case 15. The cylinder head 12 is fastened at the top of the cylinder block 11 and the crank case 15 is fastened at the bottom thereof. A plurality of cylinder bores 13 is formed on the cylinder block 11 and a piston 14 fits into each cylinder bore 13 so as to be movable in a shaft direction thereof. The crankshaft 16 is supported so as to be rotatable and is connected to each piston 14 through a connecting rod 17.

A combustion chamber 18 is formed of a wall surface of the cylinder bore 13, a lower surface of the cylinder head 12, and a top surface of the piston 14. An intake port 19 and an exhaust port 20 are formed on the cylinder head 12 for each cylinder. An intake valve 21 opens/closes the intake port 19 and an exhaust valve 22 opens/closes the exhaust port 20. The intake valve 21 and the exhaust valve 22 are driven by an intake camshaft 23 and an exhaust camshaft 24 which rotate in conjunction with rotation of the crankshaft 16, respectively. Each cylinder of the engine 1 performs four strokes: an intake stroke, a compression stroke, an expansion stroke, and an exhaust stroke while the crankshaft 16 rotates twice.

A surge tank 30 is connected to the intake port 19 through an intake manifold 29. An intake pipe 31 is connected to the surge tank 30 and an air cleaner 32 is attached to an air intake of the intake pipe 31. An electronic throttle device 34 including a throttle valve 33 is located downstream to the air cleaner 32.

An exhaust pipe 36 is connected to the exhaust port 20 through an exhaust manifold 35. A three-way catalyst 37 and a NOx storage/reduction catalyst 38 which purify harmful substances contained in exhaust gas are mounted on the exhaust pipe 36. The three-way catalyst 37 simultaneously purifies HC, CO, and NOx contained in the exhaust gas by an oxidation-reduction reaction when an air-fuel ratio is a stoichiometric ratio. The NOx storage/reduction catalyst 38 temporarily stores NOx contained in the exhaust gas when the air-fuel ratio is lean and releases stored NOx in a rich combustion region or a stoichiometric combustion region in which an oxygen concentration in the exhaust gas is decreased to reduce NOx by fuel as an added reducing agent.

An injector 39 which directly injects the fuel into the combustion chamber 18 is mounted on the cylinder head 12 for each cylinder. A spark plug 40 capable of igniting air-fuel mixture in the combustion chamber 18 is mounted on the cylinder head 12.

The hybrid vehicle 100 is equipped with an electronic control unit (ECU) 50. The ECU 50 is capable of controlling fuel injection timing of the injector 39, ignition timing of the spark plug 40 and the like. The ECU 50 determines a fuel injection quantity, the fuel injection timing, the ignition timing and the like based on a detected engine operating state such as an intake air quantity, an intake air temperature, a throttle opening, an accelerator opening, an engine speed, and a cooling water temperature. The ECU 50 can also control the K0 clutch 2, the electric rotating machine MG, the torque converter 4, and the transmission 5. The ECU 50 can control release/engagement and a degree of engagement of the K0 clutch 2. When the K0 clutch 2 includes a hydraulic actuator, the ECU 50 controls the degree of engagement (torque capacity) of the K0 clutch 2 by adjusting a supplied hydraulic pressure. The ECU 50 can also perform slip control of the K0 clutch 2 based on the engine speed and a rotation number of the electric rotating machine MG. A vehicle control device 1-1 of this embodiment is provided with the engine 1, the K0 clutch 2, the electric rotating machine MG, and the ECU 50.

An airflow sensor 52 and an intake air temperature sensor 53 are arranged on an upstream side of the intake pipe 31. The intake air quantity detected by the airflow sensor 52 and the intake air temperature detected by the intake air temperature sensor 53 are output to the ECU 50. A surge tank pressure sensor 51 which detects a pressure (surge tank pressure) in the surge tank 30 is arranged on the surge tank 30. The surge tank pressure detected by the surge tank pressure sensor 51 is output to the ECU 50. A throttle position sensor 54 detects the throttle opening of the throttle valve 33 and outputs the same to the ECU 50. An accelerator position sensor 55 detects the accelerator opening of an accelerator pedal and outputs the same to the ECU 50.

A crank angle sensor 56 detects a crank angle of the crankshaft 16 and outputs the same to the ECU 50. The ECU 50 distinguishes the intake stroke, the compression stroke, the expansion stroke, and the exhaust stroke of each cylinder and calculates the engine speed based on the crank angle. A water temperature sensor 57 detects the cooling water temperature of the engine and outputs the same to the ECU 50.

An air-fuel ratio (A/F) sensor 58 is located uptream side to the three-way catalyst 37 and an oxygen (O₂) sensor 59 is located downstream side to the three-way catalyst 37 in the exhaust pipe 36. The A/F sensor 58 and the O₂ sensor 59 detect the air-fuel ratio (amount of oxygen) of the exhaust gas and output the same to the ECU 50.

In the hybrid vehicle 100, hybrid driving or EV driving can be selectively executed. The hybrid driving is a driving mode to drive the hybrid vehicle 100 by using at least the engine 1 out of the engine 1 and the electric rotating machine MG as a power source. In the hybrid driving, the electric rotating machine MG can be used as the power source in addition to the engine 1. Meanwhile, in the hybrid driving, the electric rotating machine MG may serve as the power generator or may run idle in a no-load state.

The EV driving is a driving mode to stop the engine 1 and drive by using the electric rotating machine MG as the power source. In the EV driving, it is also possible to appropriately allow the electric rotating machine MG to generate the electric power according to a driving condition, a charging status of the battery and the like. At the time of the EV driving, the K0 clutch is released and the engine 1 is stopped.

In the hybrid vehicle 100, it is also possible to perform inertia driving to drive the hybrid vehicle 100 through inertia by disconnecting the engine 1 from the drive wheel 8. The inertia driving is performed when there is no acceleration request or when required drive force is small, for example. In the inertia driving, the K0 clutch 2 is released and transmission of the power between the engine 1 and the electric rotating machine MG and the drive wheel 8 is shut out. That is, engine braking does not act on the drive wheel 8. According to this, a load on the drive wheel 8 becomes smaller than that in a case in which the K0 clutch 2 is engaged and the engine 1 is connected to the drive wheel 8. By performing the inertia driving, fuel economy under low load can be improved. At the time of inertia driving, the engine 1 can be stopped to inhibit fuel consumption.

In the hybrid vehicle 100, there is a case in which the engine 1 is stopped while the vehicle stops. For example, there is a case in which stop time generation control to operate the engine 1 while the vehicle stops and generate the electric power by the electric rotating machine MG is performed based on the charging status of the battery, and when the stop time generation control is finished, the engine 1 is stopped. There also is a case in which the engine 1 is operated for warm-up while the vehicle stops and the engine 1 is stopped when the warm-up is finished.

When the engine 1 is started up such as when it shifts from the EV driving to the hybrid (HV) driving, the ECU 50 performs startup control of the engine 1. In the hybrid vehicle 100 of this embodiment, at least following two startup methods can be executed.

### (Ignition Startup)

Ignition startup is a startup method of starting up the engine 1 by starting rotation of the engine 1 by energy mainly generated by combustion of the engine 1. The engine 1 of the hybrid vehicle 100 of this embodiment is a direct-injection engine in which the fuel is directly injected into the cylinder. Therefore, it is possible to supply the fuel into the cylinder and start the combustion by ignition, thereby starting up the engine 1 from a state in which the engine 1 stops. In the ignition startup, it is possible to assist the startup the engine 1 by putting the K0 clutch 2 into a semi-engaged state.

Specifically, when the startup is started by the fuel injection and ignition to the engine 1, the ECU 50 sets the supplied hydraulic pressure to the K0 clutch 2 to a standby hydraulic pressure until the engine speed of the engine 1 starts increasing. The standby hydraulic pressure is set to the hydraulic pressure at which the engine 1 does not start rotating by a torque transmitted from a side of the drive wheel 8 to the engine 1 through the K0 clutch 2. That is, the standby hydraulic pressure is a clutch hydraulic pressure at which the K0 clutch 2 is engaged and a start of autonomous rotation of the engine 1 is waited for. The K0 clutch 2 is engaged by the standby hydraulic pressure and the torque is transmitted from a side of the electric rotating machine MG, so that a necessary torque of the engine 1 for starting the rotation is decreased.

When the engine speed of the engine 1 starts increasing, the ECU 50 increases the supplied hydraulic pressure to the K0 clutch 2 to an assist-time hydraulic pressure. The assist-time hydraulic pressure, which is higher than the standby hydraulic pressure, is the hydraulic pressure capable of transmitting a torque in a positive direction to the engine 1 to assist increase in rotation. The ECU 50 increases the supplied hydraulic pressure to the K0 clutch 2 to an engagement hydraulic pressure when the engine speed is synchronization with the rotation number of the electric rotating machine MG. The engagement hydraulic pressure, which is higher than the assist-time hydraulic pressure, is the hydraulic pressure capable of completely engaging the K0 clutch 2. When the K0 clutch 2 is completely engaged, the ignition startup is completed.

### (K0 Slip Startup)

K0 slip startup is a startup method of starting up the engine 1 by performing motoring by the torque transmitted through the K0 clutch 2 and starting the rotation of the engine 1. In the K0 slip startup, the supplied hydraulic pressure to the K0 clutch 2 is set to a motoring-time hydraulic pressure from the state in which the engine 1 stops. The motoring-time hydraulic pressure is higher than the assist-time hydraulic pressure and is lower than the engagement hydraulic pressure. The motoring-time hydraulic pressure is the engagement hydraulic pressure capable of at least transmitting the torque for the engine 1 to start the rotation against a friction torque of the stopping engine 1. The motoring-time hydraulic pressure is the engagement hydraulic pressure at which the K0 clutch 2 is put into the semi-engaged state and the engine speed can be gradually increased.

The ECU 50 sets the supplied hydraulic pressure to the K0 clutch 2 to the motoring hydraulic pressure and allows the electric rotating machine MG to output the torque required for cranking the engine 1 in addition to the torque corresponding to the required drive force. According to this, it becomes possible to engage the K0 clutch 2 and crank by the torque of the electric rotating machine MG to start up the engine 1.

When the engine speed is increased up to a predetermined engine speed by the motoring of the electric rotating machine MG, the ECU 50 starts the fuel injection and the ignition to the engine 1 to start up the engine 1. When the engine speed is in synchronization with the rotation number of the electric rotating machine MG, the supplied hydraulic pressure to the K0 clutch 2 is set to the engagement hydraulic pressure. When the K0 clutch is completely engaged, the K0 slip startup is completed.

If there is a request to start up the engine 1, the ECU 50 starts up the engine 1 by the ignition startup when the ignition startup can be performed or starts up the engine 1 by the K0 slip startup when the ignition startup cannot be performed. In a case of the K0 slip startup, the electric rotating machine MG is allowed to output the torque required for the motoring of the engine 1. Therefore, an output torque for driving by the electric rotating machine MG is limited in order to secure the torque required for the motoring. On the other hand, in a case of the ignition startup, the electric rotating machine MG only has to assist increase in the autonomous rotation of the engine 1. According to this, it is possible to increase a ratio of the torque which can be used for the driving in the output torque of the electric rotating machine MG by giving priority to the ignition startup in the startup of the engine 1. Therefore, it is possible to realize a small electric rotating machine MG or an enlarged EV driving region.

Herein, when the engine stops, the cylinder is preferably filled with fresh air for next ignition startup as described below. While the engine 1 is in operation, the pressure in the surge tank 30 is a negative pressure. Therefore, when the engine 1 stops while the surge tank pressure remains to be the negative pressure, the exhaust gas and blow-by gas flow back from an exhaust side into the cylinder after the engine stops and performance of the ignition startup might be deteriorated. There is a case in which an engine torque becomes insufficient at the time of the startup due to an insufficient fresh air quantity in the cylinder and a startup shock might occur.

The surge tank pressure is desirably recovered to the vicinity of an atmospheric pressure just before the engine 1 stops in order to inhibit deterioration in performance of the ignition startup. However, when the engine speed before stopping is as low as an idling speed, time before the engine 1 stops is short and there is not enough time for the surge tank pressure to be recovered. In contrast, the surge tank pressure is easily recovered when the throttle valve 33 is rapidly and widely opened just before stopping; however, the surge tank pressure is rapidly recovered due to air flowing at once and this might generate an abnormal sound.

When there is a request to stop the engine 1, the vehicle control device 1-1 of this embodiment opens the throttle valve 33 while maintaining the engine speed of the engine 1 by the electric rotating machine MG to recover the surge tank pressure to a certain degree, and then stops the engine 1. According to this, both inhibition of the occurrence of the abnormal sound and recovery of the surge tank pressure can be satisfied. In this embodiment, pre-stop motoring control or pre-stop charge control to be described hereinafter are executed as control to recover the surge tank pressure when the engine stops.

### (Pre-Stop Motoring Control)

When the ECU 50 performs a fuel cut (F/C) to stop fuel supply to the engine 1 and opens the throttle valve 33 when there is the request to stop the engine 1, this maintains the engine speed of the engine 1 and the drive force to the drive wheel 8 by the motoring (output torque) of the electric rotating machine MG. Since the throttle valve 33 is opened, pumping loss is reduced and an output torque of the engine 1 is increased, and on the other hand, the output torque of the engine 1 is decreased by the fuel cut. The ECU 50 performs output control of the electric rotating machine MG such that the increase in the torque by the reduced pumping loss and the increase in the torque by the motoring of the electric rotating machine MG match the decrease in the output torque of the engine 1 by the fuel cut.

### (Pre-Stop Charge Control)

If the ECU 50 opens the throttle valve 33 while continuously supplying the fuel to the engine 1 when there is the request to stop the engine 1, this maintains the engine speed of the engine 1 and the drive force to the drive wheel 8 by allowing the electric rotating machine MG to generate the electric power. The ECU 50 generates a negative torque by regenerative power generation by the electric rotating machine MG so as to cancel out the increase in the torque of the engine 1 by the opening of the throttle valve 33. The battery is charged with the electric power recovered by the regenerative power generation.

When there is the request to stop the engine 1, it is possible to determine whether to recover the surge tank pressure by the pre-stop motoring control or to recover the surge tank pressure by the pre-stop charge control based on the driving condition, the charging status of the battery and the like, for example. As an example, it is possible to select so as to realize comprehensive improvement in the fuel economy. For example, when it is configured to perform the pre-stop motoring control when the battery is sufficiently charged, it is possible to use sufficient electric power and inhibit the fuel consumption to improve the fuel economy. On the other hand, when it is configured to perform the pre-stop charge control when the battery is not sufficiently charged, it is possible to recover the charging status of the battery. Therefore, it is possible to inhibit the fuel consumption by decreasing the operation of the engine 1 for charging the battery.

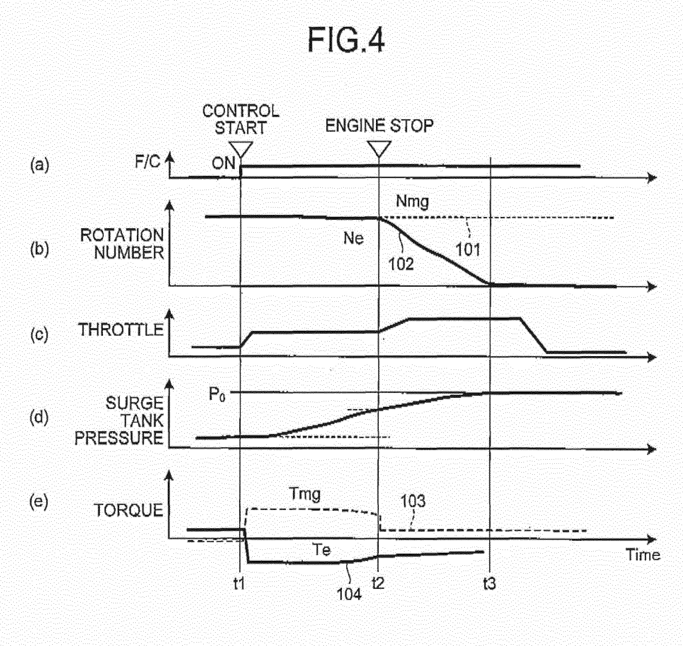

A flow of control to recover the surge tank pressure by the fuel cut and the motoring is described with reference to FIGS. 1 and 4. A control flow illustrated in FIG. 1 is executed when it is determined to select the pre-stop motoring control when the engine stops based on the driving condition, a power storage status and the like, for example. FIG. 4 is a time chart related to the pre-stop motoring control. In FIG. 4, (a) illustrates a fuel cut flag, (b) illustrates the rotation number, (c) illustrates the throttle opening, (d) illustrates the surge tank pressure, and (e) illustrates the output torque. A broken line 101 represents a rotation number Nmg of the electric rotating machine MG and a solid line 102 represents an engine speed Ne. A broken line 103 represents an output torque Tmg of the electric rotating machine MG and a solid line 104 represents an output torque Te of the engine 1.

At step S1 in FIG. 1, the ECU 50 determines whether engine stop determination is ON. The ECU 50 determines whether it is put into an engine stop processing mode based on the accelerator opening, a vehicle speed, the cooling water temperature, the power storage status of the battery and the like. In other words, the ECU 50 determines whether there is the request to stop the engine 1. As a result of the determination at step S1, when it is determined that the engine stop determination is ON (step S1-Y), the procedure shifts to step S2, otherwise (step S1-N), this control flow is finished.

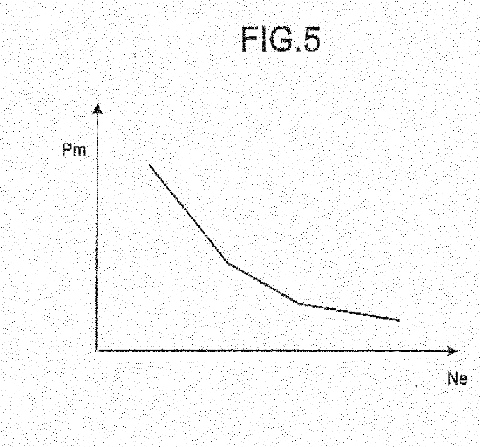

At step S2, the ECU 50 determines whether a surge tank pressure Pm is not higher than a threshold value. The ECU 50 can perform the determination at step S2 based on a map illustrated in FIG. 5, for example. FIG. 5 is a view of an example of a relationship between the engine speed Ne and the threshold value (predetermined value) of the surge tank pressure Pm. The threshold value of the surge tank pressure Pm when the engine speed Ne is high is set to a value lower than the threshold value of the surge tank pressure Pm when the engine speed Ne is low. This is because, when the engine speed Ne is low, time until the engine 1 stops after the pre-stop motoring control is finished is short and the surge tank pressure Pm is recovered with difficulty. When the surge tank pressure Pm is not higher than the threshold value, the pre-stop motoring control to recover the surge tank pressure by the fuel cut and the motoring is performed. The pre-stop motoring control is finished when the surge tank pressure Pm exceeds the threshold value.

The ECU 50 can perform the determination at step S2 based on detection results of the crank angle sensor 56 and the surge tank pressure sensor 51. When it is determined that the surge tank pressure Pm is not higher than the threshold value as a result of the determination at step S2 (step S2-Y), the procedure shifts to step S3, otherwise (step S2-N), the procedure shifts to step S7.

At step S3, the ECU 50 determines whether the engine speed Ne is near the idling speed. At step S3, it is determined whether the pre-stop motoring control is required. A threshold value at step S3 differs depending on engine specifications such as a capacity of the surge tank 30 and is determined in advance based on an experimental result and the like, for example. As an example, a condition in which the occurrence of the abnormal sound cannot be avoided when it is tried to recover the surge tank pressure by the throttle control in a case in which the K0 clutch 2 is released without the pre-stop motoring control in response to the request to stop the engine is measured. The threshold value at step S3 is set to an upper limit of a range in which the occurrence of the abnormal sound cannot be avoided for the engine speed Ne before the engine stops, for example. The threshold value of this embodiment is set to the idling speed or the engine speed slightly higher than the idling speed. When the engine speed Ne is not higher than the threshold value, it is positively determined supposing that the engine speed Ne is near the idling speed. The threshold value may be set to approximately 600 rpm, for example.

If it is determined that the engine speed Ne is near the idling speed as a result of the determination at step S3 (step S3-Y), the procedure shifts to step S4, otherwise (step S3-N), the procedure shifts to step S7.

At step S4, the ECU 50 turns ON a pre-stop motoring control executing flag. When step S4 is executed, the procedure shifts to step S5.

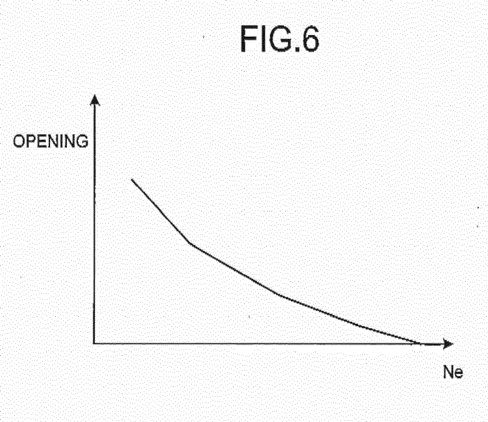

At step S5, the ECU 50 turns ON the fuel cut flag. The ECU 50 outputs a fuel cut instruction to the engine 1. In FIG. 4, the fuel cut is started at time t1 and the output torque Te of the engine 1 is decreased. Also, control to open the throttle valve 33 is performed at the same time as the start of the fuel cut. As a result, the surge tank pressure Pm starts increasing at time t1. The throttle opening during the fuel cut is determined based on a map illustrated in FIG. 6, for example. FIG. 6 is a view illustrating a correspondence relationship between the engine speed Ne and the throttle opening of the pre-stop motoring control. The throttle opening when the engine speed Ne is high is set to be smaller than the throttle opening when the engine speed Ne is low. This is because the surge tank pressure Pm is recovered with difficulty when the engine speed Ne is low as compared to a case in which the engine speed Ne is high with the same throttle opening.

Next, at step S6, the ECU 50 executes the motoring control. The ECU 50 performs the motoring by allowing the electric rotating machine MG to output a positive torque. Meanwhile, the positive torque is the torque in a rotational direction to drive the hybrid vehicle 100 in a direction of forward movement. The output torque of the electric rotating machine MG is set to the torque capable of compensating a negative torque of the engine 1 by the electric rotating machine MG and realizing a target value of the drive force. By the motoring of the electric rotating machine MG, the engine speed Ne during the fuel cut is maintained to the engine speed comparable to the engine speed Ne before the fuel cut is started. That is, in the pre-stop motoring control, the electric rotating machine MG is controlled so as to be able to maintain the engine speed Ne and maintain the target drive force based on the accelerator opening, the vehicle speed and the like. When step S6 is executed, this control flow is finished.

At step S7, the ECU 50 turns OFF the pre-stop motoring control executing flag. In FIG. 4, the surge tank pressure Pm exceeds the threshold value at time t2 and the pre-stop motoring control executing flag is turned OFF. When step S7 is executed, the procedure shifts to step S8.

At step S8, the ECU 50 executes K0 disconnecting control. The ECU 50 disengages the K0 clutch 2 to disconnect the engine 1 from the electric rotating machine MG and the drive wheel 8. In FIG. 4, the K0 clutch 2 is released at time t2. According to this, the engine speed Ne (102) is decreased. The ECU 50 further opens the throttle valve 33 at time t2 to accelerate the recovery of the surge tank pressure Pm. Since the surge tank pressure Pm is already recovered to a certain degree at time t2, the abnormal sound is less likely to occur even when the throttle opening is increased. The surge tank pressure Pm is recovered to an atmospheric pressure P₀ by time t3 at which the engine 1 stops. In this manner, the threshold value of the surge tank pressure Pm when the pre-stop motoring control is finished is determined so as to be able to recover the surge tank pressure Pm to the atmospheric pressure P₀ before the engine stops when the engine 1 is stopped thereafter.

When the K0 clutch 2 is released at time t2, the ECU 50 decreases the output torque Tmg of the electric rotating machine MG. The ECU 50 decreases the output torque of the electric rotating machine MG by an amount of compensation of the negative torque of the engine 1 to maintain the target drive force. When step S8 is executed, this control flow is finished.

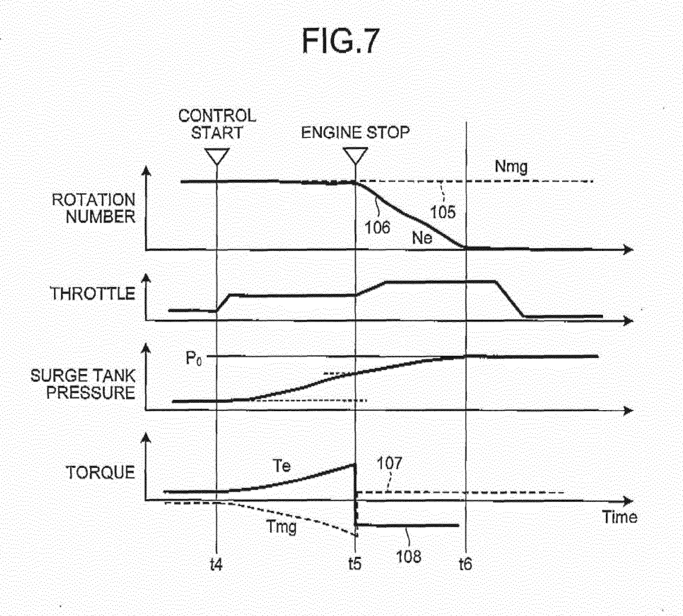

Next, the pre-stop charge control to recover the surge tank pressure Pm by continuing to supply the fuel to the engine 1 after the request to stop the engine is described with reference to FIG. 7. FIG. 7 is a time chart related to the pre-stop charge control. In FIG. 7, a broken line 105 represents the rotation number Nmg of the electric rotating machine MG and a solid line 106 represents the engine speed Ne. A broken line 107 represents the output torque Tmg of the electric rotating machine MG and a solid line 108 represents the output torque Te of the engine 1.

The condition to start the control can be similar to that in a case of the pre-stop motoring control (FIG. 1). That is, when the engine stop determination is determined to be ON at time t4, the surge tank pressure Pm is determined to be not higher than the threshold value, and the engine speed Ne is determined to be near the idling speed, a pre-stop charge control executing flag is turned ON. The threshold value of the surge tank pressure Pm and the throttle opening when the throttle valve 33 is opened in the pre-stop charge control can be made similar to those in the case of the pre-stop motoring control.

When the pre-stop charge control is started at time t4, the ECU 50 continues to supply the fuel to the engine 1 and opens the throttle valve 33. According to this, the surge tank pressure Pm is increased and the output torque Te (108) of the engine 1 is increased in response to increase in the intake air quantity. The ECU 50 controls to compensate the increase in the output torque Te of the engine 1 by the electric rotating machine MG and set the output torque Tmg of the electric rotating machine MG to the negative torque, thereby realizing the target value of the drive force. The engine speed Ne after the throttle valve 33 is opened is maintained to be similar to that before the throttle valve 33 is opened by torque adjustment by the power generation by the electric rotating machine MG. That is, in the pre-stop charge control, the electric rotating machine MG is controlled so as to be able to maintain the engine speed Ne and maintain the target drive force based on the accelerator opening, the vehicle speed and the like.

When the surge tank pressure Pm is increased to exceed the threshold value at time t5, the pre-stop charge control is finished. The ECU 50 outputs a stopping instruction to the engine 1 and disengages the K0 clutch 2 to disconnect the engine 1 from the electric rotating machine MG and the drive wheel 8. The ECU 50 also increases the output torque Tmg (107) of the electric rotating machine MG in synchronization with the disengagement of the K0 clutch 2. The ECU 50 increases the output torque Tmg of the electric rotating machine MG by an amount of the output torque Te (108) of the engine 1 which this compensates until then to maintain the target drive force. The ECU 50 also increases the throttle opening at time t5 to accelerate the recovery of the surge tank pressure Pm. The surge tank pressure Pm is recovered to the atmospheric pressure P₀ by time t6 at which the engine 1 stops.

As described above, according to the vehicle control device 1-1 of this embodiment, it is possible to increase the surge tank pressure Pm to recover when there is the request to stop the engine 1 and to inhibit the occurrence of the abnormal sound when the throttle valve 33 is opened. The fresh air quantity in the cylinder is increased by the recovery of the surge tank pressure Pm, so that startup performance when the ignition startup is performed thereafter can be improved.

Meanwhile, as described above, the vehicle control device 1-1 maintains the engine speed Ne by the electric rotating machine MG when the engine speed Ne is within a predetermined low-speed region (S3-Y) when recovering the surge tank pressure Pm in response to the request to stop the engine 1. On the other hand, it is also possible that the vehicle control device 1-1 opens the throttle valve 33 but does not maintain the engine speed Ne by the electric rotating machine MG when the engine stops in a case in which the engine speed Ne is not within the predetermined low-speed region (S3-N). In this case, it is possible to realize requisite minimum power consumption and fuel consumption for maintaining the engine speed Ne.

Herein, there may be a case in which it is not possible to maintain the engine speed Ne by the pre-stop motoring control and to maintain the engine speed Ne by the pre-stop charge control before the engine 1 stops. There may also be a case in which the pre-stop motoring control and the pre-stop charge control are finished before the surge tank pressure Pm is recovered to a target pressure. In such a case, it is possible to perform the K0 slip startup in place of the ignition startup when the stopped engine 1 is restarted next time. According to this, the K0 slip startup is performed when it is estimated that the fresh air quantity in the cylinder is insufficient or it is highly possible that this is insufficient, so that the occurrence of the startup shock is inhibited.

Meanwhile, the pre-stop motoring control and the pre-stop charge control of this embodiment can be executed not only while the hybrid vehicle 100 is running but also while this is stopping. While the hybrid vehicle 100 is running, it is possible to execute the pre-stop motoring control or the pre-stop charge control when it shifts from the HV driving to the EV driving during the driving, for example. It is also possible to execute the pre-stop motoring control or the pre-stop charge control when the engine 1 operated for the warm-up or for charging the battery during the driving such as creeping is stopped. Alternatively, there is a case in which the engine 1 is operated for the warm-up or for charging the battery while the hybrid vehicle 100 stops. In this case, it is also possible to execute the pre-stop motoring control or the pre-stop charge control before stopping the engine 1.

### [Second Embodiment]

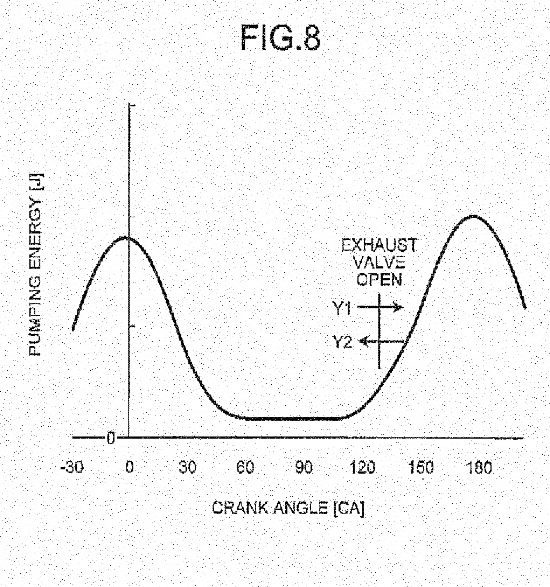

A second embodiment is described with reference to FIGS. 8 to 11. In the second embodiment, the same reference sign is assigned to a component having a function similar to that described in the first embodiment and the description is not repeated. This embodiment is different from the above-described first embodiment in that pre-stop motoring control is performed such that an exhaust manifold is filled with fresh air. According to this, a backflow of burnt gas by swingback of engine rotation when an engine stops can be reduced. As a result, a startup shock by deteriorated performance of ignition startup can be reduced.

As described with reference to FIG. 8, there is a case in which the burnt gas flows backward into a cylinder when the engine stops. FIG. 8 is a view illustrating a relationship between a crank angle and pumping energy of an engine 1. FIG. 8 illustrates an example of the pumping energy in a four-cylinder engine. When the engine 1 stops, this often stops at crank angles from 60 to 100 CA at which the pumping energy is low. However, there might be a case in which this rotates backward after passing over a range of the crank angles through inertia and stops in the above-described range of energetically stable crank angles. Herein, if an exhaust valve 22 opens at 130 CA, there is a case in which the exhaust valve 22 opens once (arrow Y1) to be pushed back by an air spring (arrow Y2) and the engine 1 stops in the range of the crank angles from 60 to 100 CA. In this case, the burnt gas flows backward from an exhaust port 20 into the cylinder in the cylinder in an expansion stroke and an oxygen concentration in the cylinder is decreased. As a result, an engine torque becomes insufficient at the time of next engine startup and the shock might occur or the startup of the engine 1 might become difficult.

In this embodiment, a vehicle control device 1-1 performs a fuel cut and performs motoring by an electric rotating machine MG just before the engine stops to maintain an engine speed of the engine 1. The vehicle control device 1-1 maintains the engine speed of the engine 1 by an output torque of the electric rotating machine MG such that the fresh air passes through the cylinder of the engine 1 to flow into an exhaust system. At that time, at least the exhaust port 20 is preferably filled with the fresh air. Alternatively, the motoring may be performed such that an exhaust manifold 35 is filled with the fresh air. According to this, the oxygen concentration in the cylinder is inhibited from decreasing even when the backflow from an exhaust side occurs when the engine stops. Therefore, a stable engine torque can be obtained at the time of each ignition startup, so that the occurrence of the startup shock can be decreased. The vehicle control device 1-1 stops the engine 1 when the fresh air of a predetermined quantity flows into the exhaust system.

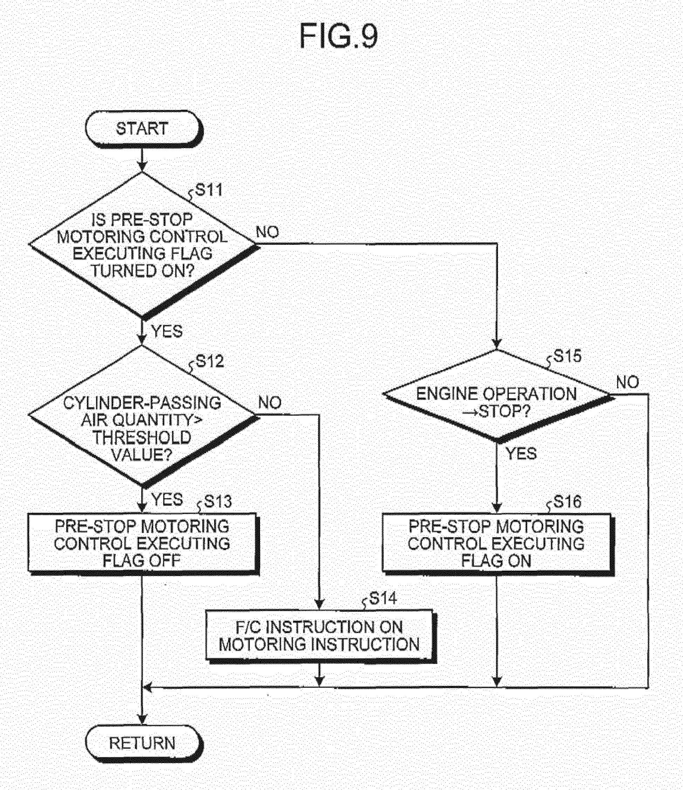

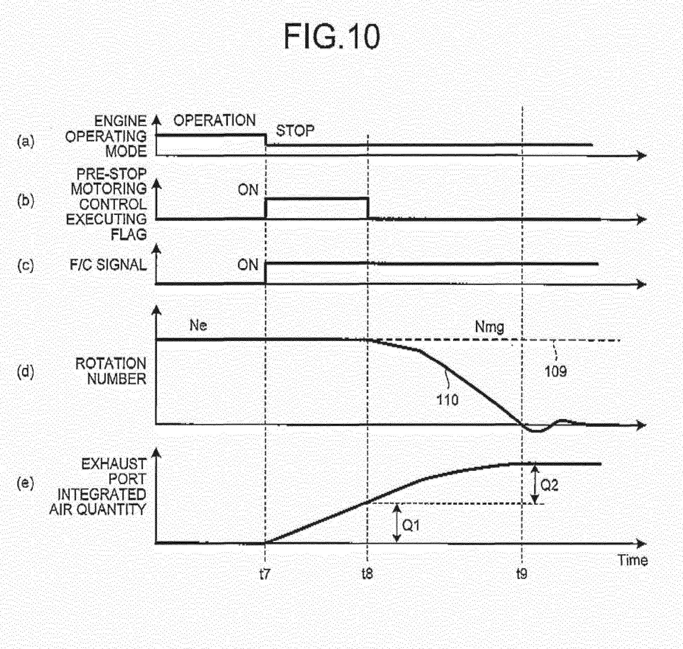

FIG. 9 is a flowchart illustrating operation of the vehicle control device according to this embodiment. FIG. 10 is a time chart related to the pre-stop motoring control of this embodiment. In FIG. 10, (a) illustrates an engine operating mode, (b) illustrates a pre-stop motoring control executing flag, (c) illustrates a F/C signal, (d) illustrates a rotation number, and (e) illustrates an exhaust port integrated air quantity. A broken line 109 represents a rotation number Nmg of the electric rotating machine MG and a solid line 110 represents an engine speed Ne.

First, at step S11, an ECU 50 determines whether the pre-stop motoring control executing flag is turned ON. At step S11, it is determined whether control to fill the exhaust port 20 with the fresh air before the engine stops is being executed. As a result of the determination, when it is determined that the pre-stop motoring control executing flag is turned ON (step S11-Y), the procedure shifts to step S12, otherwise (step S11-N), the procedure shifts to step S15.

At step S12, the ECU 50 determines whether a cylinder-passing air quantity Q1 (refer to FIG. 10) is larger than a threshold value. At step S12, it is determined whether the air quantity Q1 which passes through the cylinder while the engine speed Ne is maintained by the motoring (hereinafter, also simply referred to as "passing fresh air quantity Q1 while the rotation is maintained"), that is, the air quantity Q1 which enters the exhaust port 20 exceeds the threshold value. The threshold value is the air quantity with which the startup shock at the time of the ignition startup when an exhaust backflow occurs is smaller than a predetermined value, for example, and is determined based on a torque amount decreased when the exhaust backflow occurs from that when the exhaust backflow does not occur. The threshold value at step S12 is set to a value with which an amount of harmful substances in exhaust does not pose a problem in next engine startup.

A value measured by the airflow sensor 52, a surge tank pressure sensor 51 and the like or an estimated/calculated value can be used as the passing fresh air quantity Q1 while the rotation is maintained. As a result of the determination at step S12, when the cylinder-passing air quantity is determined to be larger than the threshold value (step S12-Y), the procedure shifts to step S13, otherwise (step S12-N), the procedure shifts to step S14.

At step S13, the ECU 50 turns OFF the pre-stop motoring control executing flag. In FIG. 10, it is determined that the cylinder-passing air quantity (integrated air quantity which flows into the exhaust port 20) Q1 exceeds the threshold value at time t8 and the pre-stop motoring control executing flag is turned OFF. The ECU 50 releases a K0 clutch 2 to disconnect the engine 1 from the electric rotating machine MG and a drive wheel 8 and stops the motoring by the electric rotating machine MG.

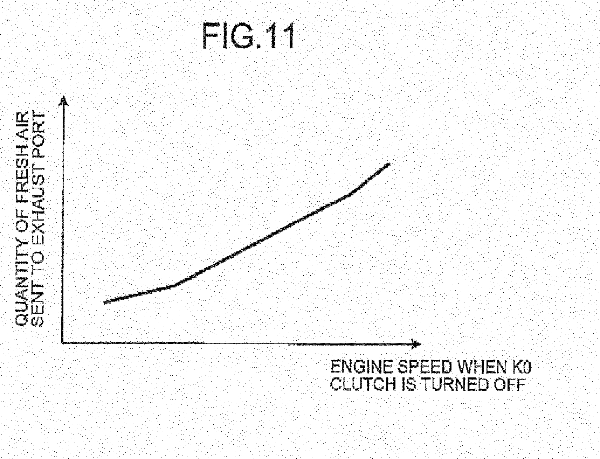

Even after the K0 clutch 2 is released, the air passes through the cylinder to flow into the exhaust port 20 until time t9 at which the engine 1 stops. A quantity Q2 of the fresh air sent to the exhaust port 20 while the rotation of the engine 1 slows down (hereinafter, also simply referred to as "passing fresh air quantity Q2 while the rotation slows down") can be calculated based on a map illustrated in FIG. 11, for example. FIG. 11 is a view illustrating a relationship between the engine speed Ne when the K0 clutch 2 is released and the passing fresh air quantity Q2 while the rotation slows down. The passing fresh air quantity Q2 while the rotation slows down when the engine speed Ne is high when the K0 clutch 2 is released is larger than the passing fresh air quantity Q2 while the rotation slows down when the engine speed Ne is low.

The threshold value of the passing fresh air quantity Q1 while the rotation is maintained is determined in consideration of the passing fresh air quantity Q2 while the rotation slows down. That is, the threshold value of the passing fresh air quantity Q1 while the rotation is maintained is determined so as to be able to inhibit the startup shock at the time of the ignition startup by a passing fresh air quantity obtained by adding the passing fresh air quantity Q1 while the rotation is maintained to the passing fresh air quantity Q2 while the rotation slows down.

At step S14, the ECU 50 turns ON a F/C instruction and issues a motoring instruction. The ECU 50 outputs an instruction to execute the fuel cut to the engine 1 and instructs the electric rotating machine MG to perform the motoring to compensate a negative torque of the engine 1 by the fuel cut. The output torque of the electric rotating machine MG can be determined as in the case of the pre-stop motoring control of the above-described first embodiment. When step S14 is executed, this control flow is finished.

At step S15, the ECU 50 determines whether the operating mode of the engine 1 is changed from operation to stop. That is, at step S15, it is determined whether there is a request to stop the engine 1. As a result of the determination at step S15, when it is determined that the operating mode of the engine 1 is changed from operation to stop (step S15-Y), the procedure shifts to step 16, otherwise (step S15-N), this control flow is finished.

At step S16, the ECU 50 turns ON the pre-stop motoring control executing flag. When step S16 is executed, this control flow is finished.

Meanwhile, the pre-stop motoring control of this embodiment is the control to send the fresh air to the exhaust system, so that this might affect exhaust purifying capacity according to a state of a three-way catalyst 37 and a NOx storage/reduction catalyst 38. Therefore, for example, when a temperature of the three-way catalyst 37 and that of the NOx storage/reduction catalyst 38 are lower than an activation temperature, that is, when it is cold, the pre-stop motoring control to send the fresh air to the exhaust system of this embodiment may be forbidden.

The pre-stop motoring control of this embodiment may be executed in combination with the pre-stop motoring control of the above-described first embodiment. That is, when both an execution condition of the pre-stop motoring control of the above-described first embodiment (hereinafter, referred to as "first pre-stop motoring control") and that of the pre-stop motoring control of this embodiment (hereinafter, referred to as "second pre-stop motoring control") are satisfied, it is possible to execute the pre-stop motoring control such that a surge tank pressure Pm is recovered and the exhaust manifold 35 is filled with the fresh air.

Specifically, when there is the request to stop the engine 1, if the surge tank pressure Pm is not higher than a threshold value (S2-Y in FIG. 1), the engine speed Ne is near an idling speed (S3-Y), and the cylinder-passing air quantity is not larger than the threshold value (S12-N in FIG. 9), the pre-stop motoring control is executed.

The pre-stop motoring control is finished when both a finish condition of the first pre-stop motoring control and that of the second pre-stop motoring control are satisfied. Specifically, when the surge tank pressure Pm exceeds the threshold value (S2-N in FIG. 1) and the cylinder-passing air quantity exceeds the threshold value (S12-Y in FIG. 9), the pre-stop motoring control is finished.

In this manner, when the first pre-stop motoring control and the second pre-stop motoring control are executed together, the cylinder is filled with the fresh air and the backflow of the burned gas from the exhaust system is inhibited. Therefore, startup performance of the ignition startup can be improved.

Meanwhile, it is also possible to determine to finish the pre-stop motoring control based on an oxygen concentration of the exhaust system in place of the determination to finish the pre-stop motoring control based on the cylinder-passing air quantity. For example, it is possible to determine to finish the pre-stop motoring control based on detection results of an A/F sensor 58 and an O₂ sensor 59.

The contents disclosed in the above-described embodiments can be appropriately combined to be carried out. Reference Signs List

- 1-1: vehicle control device
- 1: engine
- 2: K0 clutch (clutch)
- 20: exhaust port
- 30: surge tank
- 33: throttle valve (throttle)
- 50: ECU
- 100: hybrid vehicle
- MG: electric rotating machine

## Claims

1. A vehicle control device comprising:
a direct-injection engine; and
an electric rotating machine connected to the engine, wherein
the vehicle control device stops the engine after opening a throttle while maintaining an engine speed of the engine by the electric rotating machine at the time there is a request to stop the engine.

2. The vehicle control device according to claim 1, wherein
the vehicle control device maintains the engine speed of the engine by an output torque of the electric rotating machine at the time fuel supply to the engine is stopped and the throttle is opened.

3. The vehicle control device according to claim 1, wherein
the vehicle control device maintains the engine speed of the engine by allowing the electric rotating machine to generate electric power at the time the throttle is opened while continuously supplying fuel to the engine.

4. The vehicle control device according to any one of claims 1 to 3 further comprising:
a clutch configured to connect/disconnect the engine to/from the electric rotating machine, wherein
the vehicle control device starts up the engine by engaging the clutch and cranking by the torque of the electric rotating machine at the time restarting a stopped engine in a case in which the electric rotating machine cannot maintain the engine speed of the engine before the engine stops.

5. The vehicle control device according to claim 2, wherein
the vehicle control device stops the engine after maintaining the engine speed of the engine by the output torque of the electric rotating machine such that fresh air passes through a cylinder of the engine to flow into an exhaust system.
